# EUROPEAN PATENT SPECIFICATION

(11) **EP 1 098 402 B1**
(45) Date of publication and mention of the grant of the patent: **18.08.2004**
(21) Application number: 00123988.8
(22) Date of filing: 03.11.2000
(51) Int. Cl.: H01R 13/74, B60J 5/04, B60R 16/02

(54) **Door with support panel for electrical components**
Tür mit einer Trägerplatte für elektrische Bauteile
Porte avec une plaque de support pour des composants électriques

(30) Priority: 05.11.1999 DE 29919500 U
(43) Date of publication of application: 09.05.2001
(73) Proprietor: Meritor Automotive GmbH, 60314 Frankfurt (DE)
(72) Inventor: Köllner, Harald, 63674 Altenstadt (DE)
(74) Representative: GROSSE BOCKHORNI SCHUMACHER

(56) References cited:
- DE-A- 19 735 824
- DE-C- 3 500 359

## Description

The invention pertains to a door with the features of the preamble of Claim 1, in particular, a vehicle door, with a door body and a support panel for electrical components.

Vehicle doors are increasingly equipped with electrical components such as lamps, loudspeakers, electric door locks or window lifts (regulators) and the like. Such components are, at least in part, preassembled on a support panel that can be inserted into an opening of the door body or can cover such an opening. To this end, the door body has a cavity in which the components are accommodated.

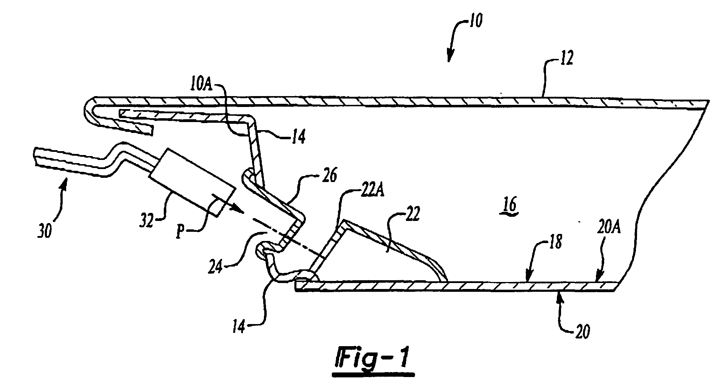

For the connection of such electrical components to an external electrical line, such as a power supply line or a data line, it is a known measure to install (mount or fix) a plug-in connector in the door body such that the external electrical line, whose end has a corresponding plug piece (male or female) which can be inserted from the outside into the plug-in connector. Such a connector is usually provided on an end face on the hinge side so that it is covered with the door closed. This plug connector must be electrically connected via a wire harness to the support panel or to the electrical components thereon. It is customary to preassemble the support panel with all electrical components, the wire harness and the plug connector suspended from it, and then to insert the panel into the opening of the door body (DE-C-35 29 660 which is considered to represent the closest state of the art, Fig. 32). In this maneuver, the plug-in connector being suspended from the end of the wire harness must additionally be guided through the opening of the door body into the door cavity and from there into an opening of the outer door shell and put in place in the outer door shell. The simultaneous handling of the support panel and the plug-in connector requires a great deal of dexterity and can be accomplished by one person only with effort.

It is also known to have a door module sheet with a plug-in cable connector being mounted at an extension arm and to fit said connector within a recess in the door body (DE-A-19 72 1452). Again, this maneuver is a combined one, which does not allow to concentrate on the mounting of the door module only but requires extra attention for fitting the plug-in cable connector, which is positioned at the end of its flexible support arm, into the plug receiving recess in the door body.

Starting from here, the invention is solving the problem of simplifying the installation of the support panel in the door body by the features of Claim 1.

According to the invention, therefore, the wire harness is dispensed with and the plug connector is fastened permanently to the inward-facing side of the support panel, being oriented such that an electrical plug connection to an external electrical line is possible through an entry hole or opening in the door body. For the installer of the support panel, the separate maneuvering of the plug connector and its fastening to the outer shell of the door body is completely eliminated.

The aforementioned components to be used according to the invention, as well as those claimed and/or described in the example of an embodiment, are not subject to any special exceptional conditions in regard to their size, shape, material selection and technical conception, so that the known selection criteria in the respective field of application can be applied without restrictions, within the scope of the claims.

Additional details, features and advantages of the object of the invention can be seen from the subclaims as well as from the description below of the associated drawing, in which a preferred embodiment of the vehicle door is represented for the sake of example.

The sole figure shows part of a vehicle door schematically, in horizontal section.

The door body 10, constructed from an outer panel 12 and an inner panel 14, forms a cavity 16, which has a large opening 18 on the inside of the door and offers a place to accommodate electrical components, not specifically represented in the figure. Serving to accommodate these electrical components is a support panel 20, which closes off the opening 18 and can be, in particular, detachably fastened at its edges to the inner panel 14. On its side 20A facing the cavity 16, the support panel 20 may bear both, the electrical components and said plug-in connector 22 belonging to them. The latter is firmly connected to the support panel. Its insertion mouth or orifice 22A is pointed towards an end face area 10A of the door body 10. A plugging direction P is thereby defined. An entry opening 24 in the inside panel 14 of the door body 10 is provided that is aligned with this insertion direction P. This entry opening is equipped, as shown in the drawing and in that sense preferred, with a rosette seal 26 which permits a peripherally sealed insertion of a corresponding plug-in connector (male piece) 32 at the end of an external electrical line 30 into the plug-in connector 22 of the support panel 20. For this it is not required that the insertion orifice 22A of the plug-in connector 22 extend up into the entry opening 24 in the inner panel 14, although that is possible. While a diagonally running insertion direction P is provided in the drawing, this is by no means compulsory. Rather, the plug-in connector 22 can also be oriented at other angles to the outside of the door body 10.

### List of reference symbols

- 10: Door body
- 10A: End face area
- 12: Outer panel
- 14: Inner panel
- 16: Cavity
- 18: Opening
- 20: Support panel
- 20A: Inner panel side
- 22: Plug-in connector
- 22A: Insertion orifice
- 24: Entry opening
- 26: Rosette seal
- 30: Line
- 32: Plug-in connector

- P: Insertion direction

## Claims

1. Door, in particular vehicle door, with a door body (10) and a support panel (20) for electrical components and a plug-in connector (22) for electrical connection of the components to an external electrical line, in which said support panel (20) is inserted into or attached to an opening (18) of the door body (10) and the plug-in connector (22) is accessible from an outer surface of the door body (10) for a plug-in connection to the external electrical line, **characterized in that** the plug-in connector (22) is fastened permanently to the support panel (20) on its inward-facing side and its insertion orifice (22A) is oriented toward an entry opening (24) in the door body for the plug-in end of the external electrical line.

2. Door according to claim 1, **characterized in that** the insertion direction (P) for the plug-in connector (22) runs diagonally between the inside of the door and an end face of the door.

3. Door according to claim 1 or 2, **characterized in that** a rosette seal (26) is inserted into said entry opening (24) of the door body (10) for the external electrical line.

4. Door according to anyone of claims 1 to 3, **characterized in that** the entry opening is placed in an end face area of the door body.

## Patentansprüche

1. Tür, insbesondere Fahrzeugtür, mit einem Türkörper (10) und einer Tragabdekkung (20) für elektrische Komponenten und einer Steckverbindung (22) für eine elektrische Verbindung der Komponenten mit einer externen elektrischen Leitung, in welcher die Tragabdeckung (20) eingesetzt oder an einer Öffnung (18) des Türkörpers (10) angebracht ist und die Steckverbindung (22) von einer äußeren Fläche des Türkörpers (10) für eine Steckverbindung mit der externen elektrischen Leitung zugänglich ist, **dadurch gekennzeichnet, daß** die Steckverbindung (22) an der nach innen zeigenden Seite der Tragabdeckung (20) dauerhaft befestigt ist und deren Einschuböffnung (22A) für das Steckende der externen elektrischen Leitung in Richtung einer Einlaßöffnung (24) in dem Türkörper ausgerichtet ist.

2. Tür nach Anspruch 1, **dadurch gekennzeichnet, daß** die Einschubrichtung (P) der Steckverbindung (22) diagonal zwischen der Innenseite der Tür und einer Abschlußfläche der Tür verläuft.

3. Tür nach Anspruch 1 oder 2, **dadurch gekennzeichnet, daß** für die externe elektrische Leitung ein Rosettenverschluß (26) in die Einlaßöffnung (24) des Türkörpers (10) eingesetzt ist.

4. Tür nach einem der Ansprüche 1 bis 3, **dadurch gekennzeichnet, daß** die Einlaßöffnung in einem Abschlußflächenbereich des Türkörpers angeordnet ist.

## Revendications

1. Porte, en particulier porte de véhicule, avec un bâti de porte (10) et une plaque de support (20) pour des composants électriques ainsi qu'un connecteur enfichable (22) pour une liaison électrique des composants à une ligne électrique externe, dans laquelle ladite plaque de support (20) est insérée dans ou fixée à une ouverture (18) du bâti de porte (10) et où le connecteur enfichable (22) est accessible depuis une surface externe du bâti de porte (10) pour une liaison enfichable à la ligne électrique externe, **caractérisée en ce que** le connecteur affichable (22) est fixé en permanence au panneau de support (20) sur son côté dirigé vers l'intérieur et **en ce que** son orifice d'insertion (22A) est orienté vers une ouverture d'entrée (24) formée dans le bâti de porte pour l'extrémité enfichable de la ligne électrique externe.

2. Porte selon la revendication 1, **caractérisée en ce que** la direction d'insertion (P) pour le connecteur enfichable (22) se déplace diagonalement entre l'intérieur de la porte et la face d'extrémité de la porte.

3. Porte selon la revendication 1 ou 2, **caractérisée en ce qu'**un joint d'étanchéité à rosace (26) est inséré dans ladite ouverture d'entrée (24) du bâti de porte (10) pour la ligne électrique externe.

4. Porte selon une quelconque des revendications 1 à 3, **caractérisée en ce que** l'ouverture d'entrée est placée dans une zone de face d'extrémité du bâti de porte.
